# EUROPEAN PATENT APPLICATION

(11) **EP 4 485 794 A1**
(43) Date of publication of application: **01.01.2025**
(21) Application number: 23847894.5
(22) Date of filing: 18.12.2023
(51) Int. Cl.: H02P 27/08, H02M 5/458, H02P 21/22

(54) **MULTIPARALLEL VARIABLE FREQUENCY DRIVE AND CONTROL METHOD THEREOF**

(30) Priority: 21.12.2022 ES 202231087
(71) Applicant: Power Electronics España, S.L., 46160 Lliria (Valencia) (ES)
(72) Inventor: SALVO LILLO, David, 46160 Lliria Valencia (ES); SALVO LILLO, Abelardo, 46160 Lliria Valencia (ES); JUAN AGUILAR, Josué, 46160 Lliria Valencia (ES); CAMPS SORIANO, José Luis, 46160 Lliria Valencia (ES); ANTÓN PONS, Marcial, 46160 Lliria Valencia (ES)
(74) Representative: Ungria López, Javier
(86) International application number: PCT/ES2023/070756
(87) International publication number: WO 2024/133997

(57) **Abstract**

The present invention relates to a multiparallel variable frequency drive (1) without a DC bus connection between power stages (3, 4^{i,...,n}) connected in parallel and the control method thereof, which allows eliminating the power loss of the drive derived from increasing the power stages. The drive has a master control module (5) for the master power stage (3) and N-slave control modules (6^{i,...,n}) for N-power stages (4^{i,...n}). The drive additionally comprises ring control lines (8) and synchronization lines (7). The master control module is configured for controlling the motor to which the drive is connected and sending the control setpoints (voltage and current) to the slave control modules in such a way that all power stages deliver the same voltage and the same current to the motor.

## Description

### OBJECT OF THE INVENTION

The present invention seeks to solve the power loss problems in variable frequency drives as power increases as a result of increasing the number of parallel power stages necessary to achieve the desired drive power.

The proposed solution consists of controlling the power stages included in variable frequency drives differently from how it is done in the prior art, as well as modifying the interconnection configuration of the power stages of the variable frequency drive.

### FIELD OF THE INVENTION

The present invention is part of the operation of variable frequency drives (VFD), also known as frequency converters, variable speed drives, variable speed converters or speed variators.

The technical field of the invention falls within the field of systems for high-power power supply and for controlling the rotational speed of an alternating current "AC" motor by means of controlling the frequency of power supplied to the motor.

### BACKGROUND OF THE INVENTION

In the prior art, high-power variable frequency drives comprise several parallel power stages to be able to supply the power required by the motor to which the variable frequency drive is connected.

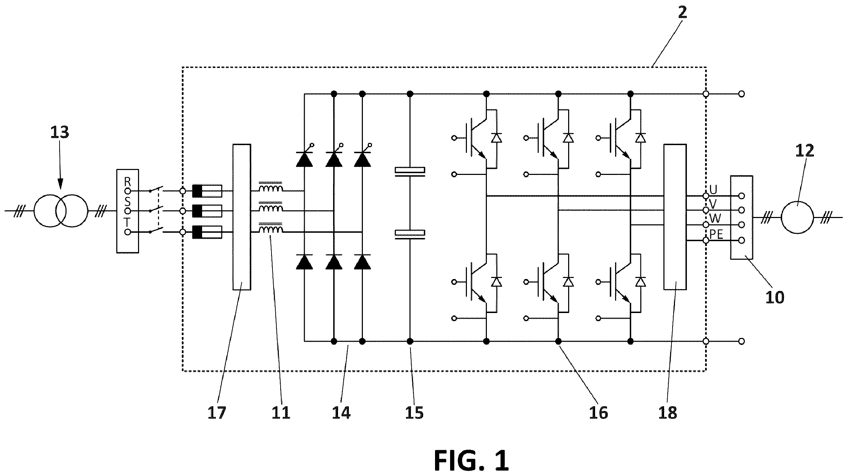

Specifically, to increase the power of variable frequency drives, several power stages are connected in parallel as shown in Figure 1. That is, variable frequency drives increase their power by replicating this power stage in parallel, using the same replicated control signals for the different parallel stages (using a single control with a single PWM pulse train) and connecting their DC buses, where:

| Size | Power (kW) | Parallel stages |
|---|---|---|
| 5 | 220 | 1 |
| 6 | 400 | 2 |
| 7 | 560 | 3 |
| 8 | 800 | 4 |

As can be seen, by increasing the number of parallel stages, it is necessary to apply a power reduction coefficient.

The solution in the prior art for further increasing power is identical to that described above. To continue increasing the power of variable frequency drives, it is necessary to continue linking power stages in parallel. All the power stages are governed by a single control module and switched by a single suitably replicated PWM pulse train.

Up until now, the solution was to group three devices with the current sizes together, linked by the DC bus, with each device being a power phase to both the grid and a motor (RST/UVW).

The following is thereby obtained:

| Size | Power (kW) | Parallel sizes | Parallel stages |
|---|---|---|---|
| 9 | 1100 | 3 × Size 6 | 3 × 2 = 6 |
| 10 | 1500 | 3 × Size 7 | 3 × 3 = 9 |
| 11 | 1750 | 3 × Size 8 | 3 × 4 = 12 |

However, the solution at the control level was identical to the less than 4 parallel stages: a large number of parallel power stages, controlled by a single control, and the control signals of which were the same for all parallel components.

It is here where, given the existing difficulties in linking large sizes, a solution different from the existing one is proposed.

The main drawbacks of the prior art solution are:
- Need for specific electronics to replicate control signals to all components.
- Due to the large number of components, oversized power supply for their consumption.
- Current imbalance between power stages.
- Need for links between devices with a sufficient section for the large flow of currents between modules, as well as extra ventilation for these links (very unfavorable points thermally).
- Large bus bars for linking components in parallel.
- Power reduction coefficient when parallelizing.
- Number of parallels with more than 4 modules is always a multiple of 3.

The fact that there is a single control for all the power stages when the number of connected power stages is large has major drawbacks as detailed below.

The drawbacks come from the tolerance of the components that make up the power stages, since small variations in these components can generate unequal current distribution and cause different heating between power stages.

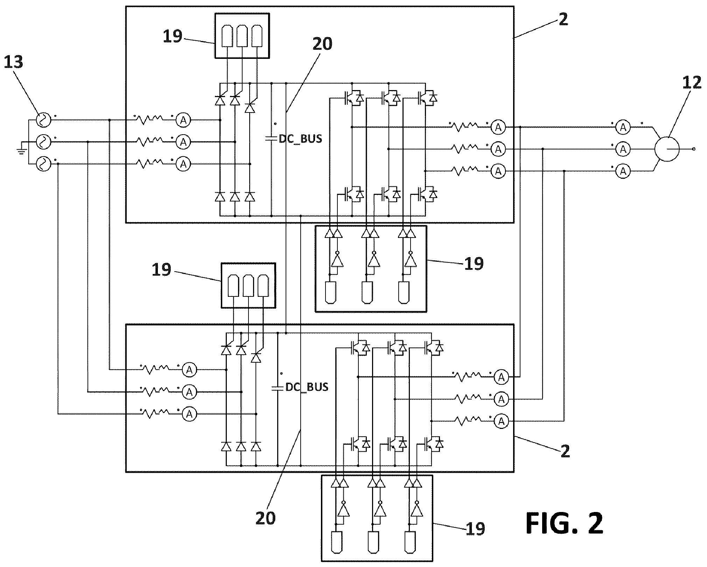

Through simulation, it can be seen how controlling the two parallel stages (Figure 2 - variable frequency drive with 2 parallel power stages with DC bus connected) with the same control signals, the distribution of currents is balanced both at the input and at the output, as there are no differences in the parallel components.

If all the components of the drive were ideal, the above would be the case. In reality, however, this is not the case, because as mentioned before, there is always a small dispersion in the tolerance of the components.

Likewise, through simulation, the impact of the non-ideal nature of the drive components can be analyzed. For example, if a difference in impedance in the input coil of 10% is assumed, since the DC buses are linked and have the same control signals, the currents at the output of the drive are identical (the currents that reach the motor ).

However, due to the difference in input impedance, the rectifier currents in the power stages are different, which generates a thermal difference between the two parallel branches, which must be taken into account since it decreases the power of the power stages.

In turn, since the buses are linked so that the motor to which the output of the variable frequency drive is connected is not affected by these differences in input, a current flow through the bus connections is produced, generating extra heating of the links.

Additionally, in parallel devices for more than four modules, and due to the RST/UVW arrangement, a flow appears between buses with the frequency difference between the input voltage and that generated by the motor.

All these internal power flows in the device make it necessary to oversize the linking points between parallels and to reduce the power achieved proportionally compared to the 1-module device, significantly increasing the cost per W.

| Size | Power (kW) | Parallel sizes | Parallel stages |
|---|---|---|---|
| 5 | 220 | 1 | 220 |
| 6 | 400 | 2 | 200 |
| 7 | 560 | 3 | 186.6 |
| 8 | 800 | 4 | 200 |
| 8 | 1100 | 6 | 183.3 |
| 8 | 1500 | 9 | 166.6 |
| 8 | 1750 | 12 | 145.8 |

### DESCRIPTION OF THE INVENTION

To avoid the above drawbacks, the present invention describes a multiparallel variable frequency drive and a control method thereof which, by eliminating the connections between DC buses of the parallel power stages and the individualized control of the power stages, achieves the following advantages:
- Possibility of balancing power between power stages;
- Possibility of harnessing power by power stages;
- Simplification of the HW, elimination of connection between bus bars;
- Possibility of increasing the number of parallel power stages in a scalable manner;
- Allows for greater redundancy;
- The number of parallels with more than 4 modules may not be a multiple of 3.

In addition to what was indicated above, the present invention has a very important advantage when the variable frequency drive is powered by multipulse transformers. A fairly common case of multiparallel variable frequency drives is the case of multipulse devices, since it is very normal that for these high powers, the devices are powered by multipulse transformers (12,18,24 pulses), to improve the THDi of the installation.

In the case of classic parallels, a difference in impedances normally appeared between the secondaries of the multipulse transformers, generating voltage differences between the different secondaries, which caused an imbalance in the rectifying part. This is also a reason for the reduction of power in parallels. However, having the buses linked together is not reflected in the motor current, creating a recirculation current between the buses.

With the new variable frequency drive of the present invention, without the DC buses linked, current balancing can be carried out, obtaining an output current with a harmonic content recirculating between devices that does not affect the motor. As a final result, a balanced current is obtained at the input.

Another additional advantage of the present invention, compared to the topology and control of the prior art, is that it allows redundancy of the multiparallel variable frequency drive.

In classic parallel variable frequency drives, which had a single control on one side, and the power stages were interconnected, in the event of any component failure, the entire variable frequency drive was affected, causing it to stop (a complete phase cannot be stopped given the UVW connection to the motor).

With the new modular design without power connections of the multiparallel variable frequency drive of the present invention, as long as the control module is powered (for example with external 24V), it is possible to isolate the damaged or faulty control module/power stage and continue working with the rest of the parallel power stages of the variable frequency drive.

All of the above advantages are obtained in exchange for replicating the control electronics in each control module and wiring the communication/control and synchronization lines.

To obtain the above advantages, in a first aspect of the invention, a multiparallel variable frequency drive is disclosed. The multiparallel variable frequency drive comprises: an input connectable to a three-phase AC source; an output connectable to a three-phase motor; a master power stage connected to the input and output; a master control module for controlling the master power stage; N-slave power stages connected to the input and output, wherein the N-slave power stages are connected in parallel with each other and in parallel with the master power stage; N-slave control modules corresponding to the N-slave power stages; a synchronization line with a ring topology that connects the master control module with the N-slave control modules over which a synchronization signal is transmitted; and a control line with a ring topology that connects the first master control module with the N-slave control modules. The master power stage and each of the N-slave power stages have respective isolated DC buses, that is, without interconnection between the DC buses. The master control module is configured, in each control cycle "T_{control}", for: generating a synchronization signal and sending the synchronization signal to the N-slave control modules sequentially; measuring three-phase currents (lu_M, Iv_M, Iw_M) and a three-phase voltage (Vd_M, Vq_M) at the output of the master power stage; calculating a master voltage-to-motor phasor (V _M, theta_M) from a control angle (theta_control) and the measured three-phase voltage (Vd_M, Vq_M); calculating a master current-to-motor phasor (Id_M, Iq_M) from the measured three-phase currents (lu_M, Iv_M, Iw_M) and an angle (theta_M) of the master voltage-to-motor phasor (V _M, theta_M); sending the master voltage-to-motor phasor (V_M), theta_M) and the master current-to-motor phasor (Id_M, Iq_M) over the control line to the slave control modules. In turn, the N-slave control modules are configured, in each control cycle "T_{control}", for: measuring three-phase currents (Iu_Ei,...,En; Iv_Ei,...,En; Iw_Ei,...En) at the output of corresponding slave power stages; calculating slave current phasors (Id_Ei,...,En; Iq_Ei,...,En) from the measured three-phase currents (Iu_Ei,...,En; Iv_Ei,...,En; Iw_Ei,...En) and the angle (theta_M) of the master voltage-to-motor phasor (V _M, theta_M); and calculating respective slave voltage-to-motor phasors (Vu_Ei_M,...,En_M; Vv_Ei,...,En_M; Vw_Ei_M,...,En_M) and respective slave current-to-motor phasors (Iu_Ei_M,...,En_M; Iv_Ei_M,...,En_M; Iw_Ei_M,...,En_M) by means of a closed-loop control, wherein each slave current-to-motor phasor (Iu_Ei_M,...,En_M; Iv_Ei_M,...,En_M; Iw_Ei_M,...,En_M) is calculated as the slave current phasor (Id_Ei,...,En; Iq_Ei,...,En) modified with the current-to-motor phasor (Id_M, Iq_M) (the components of which are used as current references); and each slave voltage-to-motor phasor (Vu_Ei_M,...,En_M; Vv_Ei,...,En_M; Vw_Ei_M,...,En_M) is calculated from the corresponding slave current-to-motor phasor (Id_Ei M,...,En M; Iq_Ei_M,..., En_M) and the master voltage-to-motor phasor (V _M, theta_M). Finally, the master control module and the N-slave control modules are configured, in a control cycle following the "T_{control}", for controlling the master power stage and the slave power stages with the master voltage-to-motor phasor (V _M, theta_M) and the "N" slave voltage-to-motor phasors (Vu_Ei_M, ... ,En_M; Vv_Ei,..., En_M; Vw_Ei_M, ... ,En_M) calculated for the control cycle "T_{control}", respectively.

In one embodiment of the invention, the three-phase AC source is a 12, 18 or 24 pulse multi-pulse transformer.

In one embodiment of the invention, the master control module and the N-slave control modules are powered by 24V.

In a second aspect of the invention, a control method of a multiparallel variable frequency drive is disclosed, wherein the multiparallel variable frequency drive comprises: an input connectable to a three-phase AC source; an output connectable to a three-phase motor; a master power stage connected to the input and output; a master control module for controlling the master power stage; N-slave power stages connected to the input and output, the N-slave power stages being connected in parallel with each other and in parallel with the master power stage; N-slave control modules corresponding to the N-slave power stages; a synchronization line with a ring topology that connects the master control module with the N-slave control modules over which a synchronization signal is transmitted; a control line with a ring topology that connects the first master control module with the N-slave control modules; the master power stage and each of the N-slave power stages have respective isolated DC buses (no interconnection between the DC buses). The method comprises carrying out the following in the master control module and in each control cycle "T_{control}":
∘ generating a synchronization signal and sending the synchronization signal to the N-slave control modules sequentially;
∘ measuring three-phase currents (lu_M, Iv_M, Iw_M) and a three-phase voltage (Vd_M, Vq_M) at the output of the master power stage;
∘ calculating a master voltage-to-motor phasor (V _M, theta_M) from a control angle (theta_control) and the measured three-phase voltage (Vd_M, Vq_M);
∘ calculating a master current-to-motor phasor (Id_M, Iq_M) from the measured three-phase currents (lu_M, Iv_M, Iw_M) and an angle (theta_M) of the master voltage-to-motor phasor (V _M, theta_M);
∘ sending the master voltage-to-motor phasor (V_M), theta_M) and the master current-to-motor phasor (Id_M, Iq_M) over the control line to the slave control modules.

Additionally, the method comprises carrying out the following in the N-slave control modules and in each control cycle "T_{control}":
∘ measuring three-phase currents (Iu_Ei,..., En; Iv_Ei,...,En; Iw_Ei,...En) at the output of corresponding slave power stages;
∘ calculating slave current phasors (Id_Ei,...,En; Iq_Ei,...,En) from the measured three-phase currents (Iu_Ei,...,En; Iv_Ei,...,En; Iw_Ei,...En) and the angle (theta_M ) of the master voltage-to-motor phasor (V _M, theta_M);
∘ calculating respective slave voltage-to-motor phasors (Vu_Ei_M,...,En_M; Vv_Ei,...,En_M; Vw_Ei_M,...,En_M) and respective slave current-to-motor phasors (Iu_Ei_M,...,En_M; Iv_Ei_M,...,En_M; Iw_Ei_M,...,En_M) by means of a closed-loop control, wherein each slave current-to-motor phasor (Iu_Ei_M,...,En_M; Iv_Ei_M,...,En_M; Iw_Ei_M,...,En_M) is calculated as the slave current phasor (Id_Ei,...,En; Iq_Ei,...,En) modified with the current-to-motor phasor (Id_M, Iq_M); and each slave voltage-to-motor phasor (Vu_Ei_M,...,En_M; Vv_Ei,...,En_M; Vw_Ei_M,...,En_M) is calculated from the corresponding slave current-to-motor phasor (Id_Ei_M,...,En_M; Iq_Ei_M,..., En_M) and the master voltage-to-motor phasor (V_M, theta_M);

Furthermore, in addition, it comprises carrying out the following in the master control module and in the N-slave control modules, in a control cycle following "T_{control}", controlling the master power stage and the slave power stages with the master voltage-to-motor phasor (V _M, theta_M) and the slave voltage-to-motor phasors (Vu_Ei_M,...,En_M; Vv_Ei,...,En_M; Vw_Ei_M,...,En_M) calculated for the control cycle "T_{control}", respectively.

In one embodiment of the invention, the method additionally comprises compensating for a lag in the transmission of the synchronization signal by each of the N-slave control modules by advancing the sending of the synchronization signal by a time equivalent to the lag.

### BRIEF DESCRIPTION OF THE FIGURES

Figure 1 shows the power stage from the prior art for a variable frequency drive.
Figure 2 shows a variable frequency drive with two power stages from the prior art.
Figure 3 shows a variable frequency drive with two power stages according to the present invention.
Figure 4 shows a Master control module and interconnected slave control modules of the present invention.
Figure 5 shows synchronization diagrams between the master control module and two slave control modules.
Figure 6 shows the control scheme for the master control module and for the slave control modules.
Figure 7 shows synchronization diagrams between the master control module and the slave control modules with lag compensation in the communication medium (optical fiber).

### DESCRIPTION OF AN EMBODIMENT OF THE INVENTION

List:
1.- multiparallel variable frequency drive;
2.- power stage;
3.- master power stage;
4^{i,...n}.- slave power stages;
5.- master control module;
6^{i,...n}.- slave control modules;
7.- synchronization line;
8.- control line;
9.- drive/power stage input;
10.- drive/power stage output;
11.- input coil (three-phase);
12.- motor;
13.- AC grid;
14.- rectifier bridge;
15.- DC bus;
16.- inverter bridge;
17.- EMC filter;
18.- dv/dt filter;
19.- control module according to the prior art;
20.- DC bus connection according to the prior art.

The present invention consists of a multiparallel variable frequency drive. That is, a variable frequency drive that has multiple power stages connected in parallel in order to deliver large amounts of power to the motor to which the variable frequency drive is connected.

The power stage 2 used in both variable frequency drives from the prior art and the variable frequency drive of the present invention is shown in Figure 1. The power stage 2 comprises the input 9 of the power stage which is connected externally to the AC grid 13 and internally to the EMC filter 17, which is connected with the input coil 11. The input coil 11 is connected with the rectifier bridge 14, which is connected with the DC bus 15 and this in turn with the inverter bridge 16. The inverter bridge can be connected directly with the output 10 of the power stage 2 or, alternatively, the dv/dt filter 18 can be connected between the inverter bridge 16 and the output 10 of the power stage. The Output 10 is connected with the motor 12. The filter is optional because it helps protect motor 12 from voltage spikes.

The variable frequency drive from the prior art is shown in Figure 2. As can be seen in Figure 2, the variable frequency drive from the prior art has two power stages 2 connected to each other in parallel and with the linked DC buses 20. Additionally, the variable frequency drive from the prior art has the same control module 19 to control all the power stages 2. The control module 19 from the prior art generates the same control signals (triggering of the switches/transistors in the rectifier 14 and the inverter 16) for all the power stages 2.

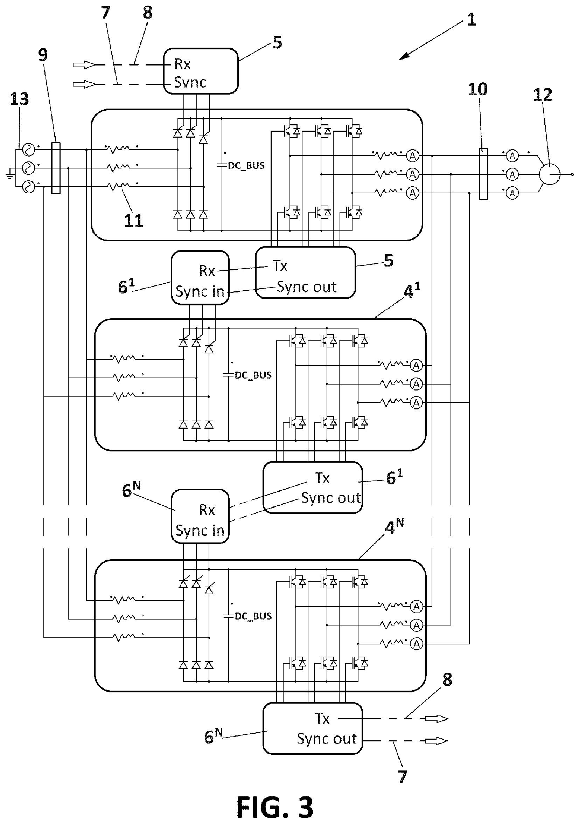

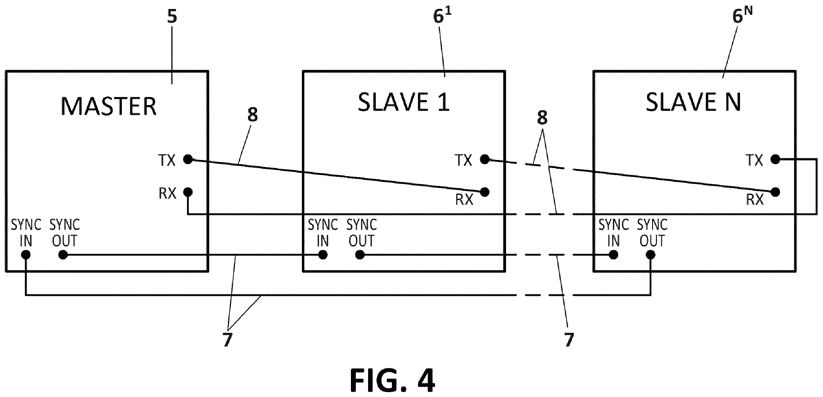

Moreover, as shown in Figure 3, the multiparallel variable frequency drive 1 of the present invention has a new topology for the parallel power stages 3, 4^{i,...n}, where there is no connection of the DC buses of the power stages, which avoids the drawbacks previously mentioned in the prior art section. Additionally, in the multiparallel variable frequency drive 1 of the present invention, each parallel power stage 3, 4^{i,...n} has its own control module 5, 6^{i,...n}, each control module 5, 6^{i,...n} generating its own trigger signals. The control modules 5, 6^{i,...n} are communicated with each other through the synchronization line 7 and the control line 8. As illustrated in Figure 4, both the synchronization line 7 and the control line 8 connect control modules 5, 6^{i,...n} by means of a ring topology.

Since the variable frequency drive 1 has to control the motor 12, by adjusting the frequency and voltage required by the motor 12, the multiparallel variable frequency drive 1 of the present invention has a main or "master" control module 5 (see Figure 3), which is the only one responsible for controlling the motor 12 to which the multiparallel variable frequency drive 1 is connected. Slave control modules 6^{i,...n} receive from the master control module 5 the necessary commands so that the motor receives the power it needs with the frequency and voltage (V_M, theta_M; Vu_Ei_M, ... ,En_M; Vv_Ei, ... , En_M; Vw_Ei_M,...,En_M) required as explained below.

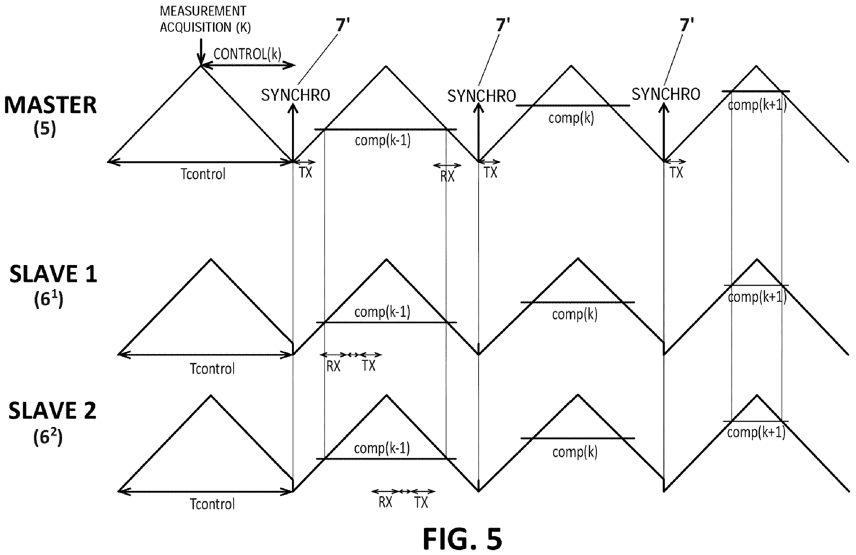

Taking into account the ring topology indicated above, the master control module 5 generates a synchronization signal 7' that the master control module 5 itself sends over the synchronization line 7 to the first secondary or "slave" control module 6¹ (see Figure 5), and this one sends it to the next one (second control module 6²) until reaching the last control module 6", so that the "slave" control modules have a synchronization reference between them with the synchronization signal 7' generated by the master control module 5 and which the slave control modules 6^{i,...n} replicate over the synchronization line 7. Since the control modules are connected in a "ring", the last slave control module 6ⁿ is connected to the master control module 5. The synchronization signal 7' (see Figure 5) is sent every control cycle "T_{control}" to ensure perfect synchronization of the controls of the slave control modules 6^{i,...n} with the master control module 5.

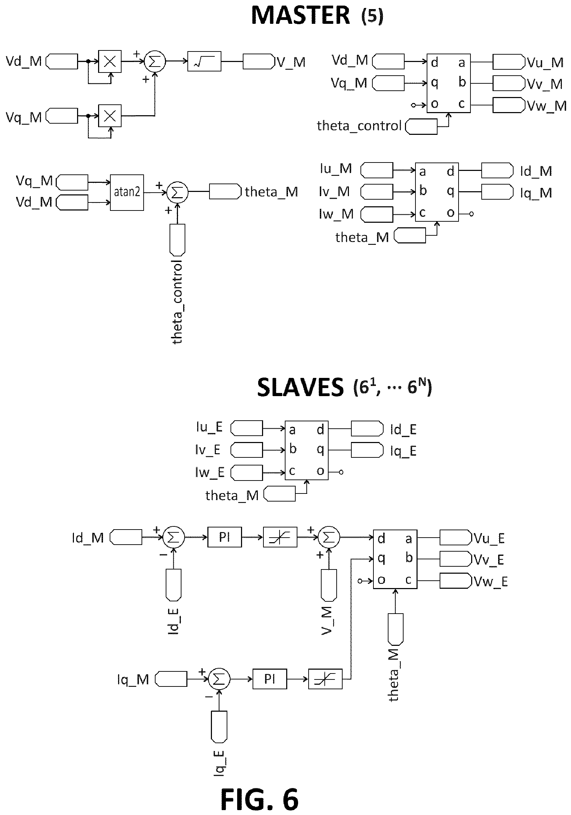

In each control cycle "T_{control}", the master control module 5 measures the three-phase currents (lu_M, Iv_M, Iw_M) and the three-phase voltage (Vd_M, Vq_M) at the output of the master power stage 3. The master control module 5 calculates (Figure 6) the master voltage-to-motor phasor (V_M; theta_M) from a control angle (theta_control) and the three-phase voltage (Vd_M, Vq_M). The control angle (theta_control) is the angle necessary for the master power stage 3 to generate the voltage (Vu_M, Vv_M, Vw_M) needed by the motor. The master control module 5 calculates the master current-to-motor phasor (Id_M, Iq_M) from the measured three-phase currents (lu_M, Iv_M, Iw_M) and the angle (theta_M) of the master voltage-to-motor phasor (V_M, theta_M). ). The master control module 5 sends the master voltage-to-motor phasor (V_M; theta_M) and the master current-to-motor phasor (Id_M, Iq_M) over the control line 8 to the slave control modules 6^{i,...n}. In this way, the master control module has calculated the voltage and current that the master power stage 3 must provide to the motor 12 in the control cycle following "T_{control}". Furthermore, that voltage and that current are what the slave power stages 4^{i,...,n} have to generate. To do this, the master control module 5 sends, in the same control cycle "T_{control}", the master voltage-to-motor phasor (V_M; theta_M) and the master current-to-motor phasor (ld_M, Iq_M) over the control line 8 to the slave control modules 6^{i,...n}, starting with the first slave control module 6¹ according to the ring topology of the control line 8 (see Figure 5).

In the same control cycle "T_{control}", the first slave control module 6¹ measures the three-phase currents (lu_E1, Iv_E1, Iw_E1) at the output of the first slave power stage 4¹ and calculates the current phasor (Id_E1, Iq_E1) from the measured three-phase currents (lu_E1, Iv_E1, Iw_E1) and the angle (tetha_M) of the master voltage-to-motor phasor (V_M); theta_M). The control reference for voltage and current for the first slave control module 6¹ is the master voltage-to-motor phasor (V _M; theta_M) and the master current-to-motor phasor (Id_M, Iq_M). Therefore, to match the voltages and currents of the slave power stages to the master power stage, the first slave control module 6¹ calculates the slave voltage-to-motor phasor (Vu_E1_M; Vv_E1_M; Vw_E1_M) and the slave current-to-motor phasor (Id_E1_M; Iq_E1_M) by means of a closed loop control, wherein the slave current-to-motor phasor (Id_E1_M; Iq_E1_M) is calculated as the slave current phasor (Id_E1, Iq_E1) modified with the current-to-motor phasor (Id_M, Iq_M); and the slave voltage-to-motor phasor (Vu_E1_M; Vv_E1_M; Vw_E1) is calculated from the slave current-to-motor phasor (Id_E1_M; Iq_E1_M) and the master voltage-to-motor phasor (V_M, theta_M) (see Figure 6). The first slave control module 6¹ sends, in the same control cycle "T_{control}", the master voltage-to-motor phasor (V_M); theta_M) and the master current-to-motor phasor (Id_M, Iq_M) to the second slave control module 6² over the control line 8 (see Figure 5). Additionally, the first slave control module 6¹ sends, in the same control cycle "T_{control}", the slave current-to-motor phasor (Id_E1_M; Iq_E1_M) to the second slave control module 6² over the control line 8.

In the same control cycle "T_{control}", the second slave control module 6² performs the same measurements and control as the first slave control module 6¹. That is, the second slave control module 6² measures the three-phase currents (lu_E2, Iv_E2, Iw_E2) at the output of the second slave power stage 4² and calculates the current phasor (Id_E2, Iq_E2) from the measured three-phase currents (lu_E2, Iv_E2, Iw_E2) and the angle (tetha_M) of the master voltage-to-motor phasor (V_M); theta_M). The control reference for voltage and current for the second slave control module 6² continues to be the master voltage-to-motor phasor (V _M; theta_M) and the master current-to-motor phasor (Id_M, Iq_M). Therefore, to match the voltages and currents, the second slave control module 6² calculates the slave voltage-to-motor phasor (Vu_E2_M; Vv_E2_M; Vw_E2_M) and the slave current-to-motor phasor (Id_E2_M; Iq_E2_M) by means of a closed loop control, wherein the slave current-to-motor phasor (Id_E2_M; Iq_E2_M) is calculated as the slave current phasor (Id_E2, Iq_E2) modified with the current-to-motor phasor (Id_M, Iq_M); and the slave voltage-to-motor phasor (Vu_E2_M; Vv_E2_M; Vw_E2_M) is calculated from the slave current-to-motor phasor (Id_E2_M; Iq_E2_M) and the master voltage-to-motor phasor (V_M, theta_M) (see Figure 6). Assuming the exemplary embodiment of Figure 5 where there is a master control module (5) and two slave control modules (6¹ and 6²), the second slave control module 6² sends, in the same control cycle "T_{control}", the slave current-to-motor phasor (Id_E2_M; Iq_E2_M) plus the slave current-to-motor phasor (Id_E1_M; Iq_E1_M) of the first slave control module 6¹, plus the master current-to-motor phasor (Id_M, Iq_M), to the master control module 5 over the control line 8. In this way, the master control module 5 knows the currents that will be supplied to the motor at the instant of time following the control cycle "T_{control}", thereby completing the control carried out by the master control module 5.

At the end of the control cycle "T_{control}", the master control module 5, the first slave control module 6¹ and the second slave control module 6² know the current and voltage phasors that the master power stage 3 and the first slave power stage 4¹ and the second slave power stage 4² have to generate, respectively. In other words, all the power stages (3, 4¹, 4²) will generate the same voltage and current phasors in the control time following the control cycle "T_{control}", since the communication and synchronization between the control module 5 and the slave control modules 6¹ and 6² has been carried out during the control cycle "T_{control}".

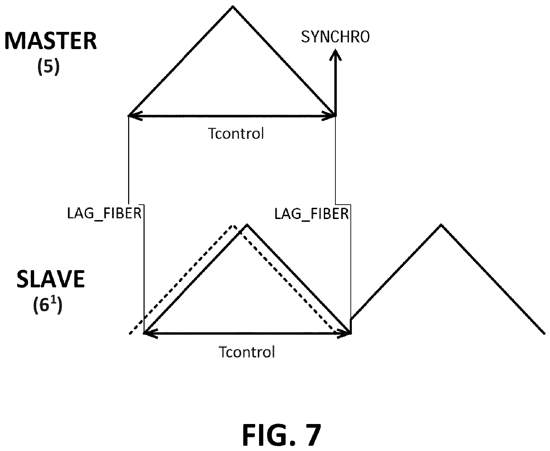

With respect to the synchronization signal 7', each slave control module will replicate it, but will have previously compensated (if necessary) for the lag generated by the communication medium (optical fiber, for example), as shown below (Figure 7).

In this way, when the system is ideal, the slave power stages perform the same voltage phasor as the master power stage, so the result is identical to the linked DC bus configuration from the prior art, since the trigger signals obtained in the master control module and in the slave control modules are identical, making a distribution of the currents between the different parallel power stages equal.

However, for a 10% impedance difference in the input coil 11 (same dispersion in the tolerance of the coil components as mentioned in "background of the invention") and without activating the current balancing of the present invention, that is, generating the same pulses in the slave power stages as in the master power stage, now by not having the DC buses linked, a current difference is generated between the power stages. And at the output of drive 10, a recirculation also appears between the power stages (as the DC buses are not linked), increasing the harmonic content of the currents, which, however, the motor 12 does not perceive. By applying individualized control of the power stages by means of the individual control modules but connected as explained above, the currents at the output 10 of the drive are balanced. A harmonic current recirculation then occurs between the power stages connected in parallel, but the motor does not receive it. And at the input 9 of the drive 1, by balancing the currents at the output 10, the input currents are also balanced.

## Claims

1. **A MULTIPARALLEL VARIABLE FREQUENCY DRIVE,** wherein the multiparallel variable frequency drive (1) comprises:
• an input (9) connectable to a three-phase AC source (13);
• an output (10) connectable to a three-phase motor (12);
• a master power stage (3) connected to the input (9) and the output (10);
• a master control module (5) for controlling the master power stage (3);
• N-slave power stages (4^{i,...n}) connected to the input (9) and the output (10), with the N-slave power stages (4^{i,...n}) connected in parallel with each other and in parallel with the master power stage (3);
• N-slave control modules (6^{i,...n}) corresponding to the N-slave power stages (4^{i,...n});
• a synchronization line (7) with ring topology that connects the master control module (5) with the N-slave control modules (6^{i,...n}) over which a synchronization signal (7') is transmitted; and,
• a control line (8) with a ring topology that connects the first master control module (5) with the N-slave control modules (6^{i,...n});
wherein:
• the master power stage (3) and each of the N-slave power stages (4^{i,...n}) have respective isolated DC buses;
• the master control module (5) is configured, in each control cycle "T_{control}", for:
∘ generating a synchronization signal (7') and sending the synchronization signal (7') to the N-slave control modules (6^{i,...n}) sequentially;
∘ measuring three-phase currents (lu_M, Iv_M, Iw_M) and a three-phase voltage (Vd_M, Vq_M) at the output of the master power stage (3);
∘ calculating a master voltage-to-motor phasor (V_M, theta_M) from a control angle (theta_control) and the measured three-phase voltage (Vd_M, Vq_M);
∘ calculating a master current-to-motor phasor (Id_M, Iq_M) from the measured three-phase currents (lu_M, Iv_M, Iw_M) and an angle (theta_M) of the master voltage-to-motor phasor (V_M, theta_M);
∘ sending the master voltage-to-motor phasor (V_M), theta_M) and the master current-to-motor phasor (Id_M, Iq_M) over the control line (8) to the slave control modules (6^{i,...n});
• the N-slave control modules (6^{i,...n}) are configured, in each control cycle "T_{control}", for:
∘ measuring three-phase currents (Iu_Ei,...,En; Iv_Ei,...,En; Iw_Ei,...En) at the output of corresponding slave power stages (4^{i,...n});
∘ calculating slave current phasors (Id_Ei,...,En; Iq_Ei,...,En) from the measured three-phase currents (Iu_Ei,...,En; Iv_Ei,...,En; Iw_Ei,...En) and the angle (theta_M ) of the master voltage-to-motor phasor (V_M, theta_M);
∘ calculating respective slave voltage-to-motor phasors (Vu_Ei_M,...,En_M; Vv_Ei,...,En_M; Vw_Ei_M,...,En_M) and respective slave current-to-motor phasors (Iu_Ei_M,...,En_M; Iv_Ei_M,...,En_M; Iw_Ei_M,...,En_M) by means of a closed-loop control, wherein each slave current-to-motor phasor (Iu_Ei_M,...,En_M; Iv_Ei_M,...,En_M; Iw_Ei_M,...,En_M) is calculated as the slave current phasor (Id_Ei,...,En; Iq_Ei,...,En) modified with the current-to-motor phasor (Id_M, Iq_M); and each slave voltage-to-motor phasor (Vu_Ei_M,...,En_M; Vv_Ei,...,En_M; Vw_Ei_M,...,En_M) is calculated from the corresponding slave current-to-motor phasor (Id_Ei_M,...,En_M; Iq_Ei M,..., En_M) and the master voltage-to-motor phasor (V_M, theta_M);
• the master control module (5) and the N-slave control modules (6^{i,...n}) are configured, in a control cycle following "T_{control}", for controlling the master power stage (3) and the slave power stages (4^{i,...n}) with the master voltage-to-motor phasor (V _M, theta_M) and the "N" slave voltage-to-motor phasors (Vu_Ei_M,...,En_M; Vv_Ei,... ,En_M; VW_Ei_M,...,En_M) calculated for the control cycle "T_{control}", respectively.

2. **THE MULTIPARALLEL VARIABLE FREQUENCY DRIVE** according to claim 1, wherein the three-phase AC source (13) is a multi-pulse transformer with 12, 18 or 24 pulses.

3. **THE MULTIPARALLEL VARIABLE FREQUENCY DRIVE** according to claim 1, wherein the master control module (5) and the N-slave control modules (6^{i,...n}) are powered by 24v.

4. **A CONTROL METHOD OF A MULTIPARALLEL VARIABLE FREQUENCY DRIVE,** wherein the drive (1) comprises: an input (9) connectable to a three-phase AC source (13); an output (10) connectable to a three-phase motor (12); a master power stage (3) connected to the input (9) and the output (10); a master control module (5) for controlling the master power stage (3); N-slave power stages (4^{i,...n}) connected to the input (9) and the output (10), with the N-slave power stages (4^{i,...n}) connected in parallel with each other and in parallel with the master power stage (3); N-slave control modules (6^{i,...n}) corresponding to the N-slave power stages (4^{i,...n}); a synchronization line (7) with ring topology that connects the master control module (5) with the N-slave control modules (6^{i,...n}) over which a synchronization signal (7') is transmitted; a control line (8) with a ring topology that connects the first master control module (5) with the N-slave control modules (6^{i,...n}); and wherein the master power stage and each of the N-slave power stages have respective isolated DC buses;
wherein the method is **characterized in that** it comprises carrying out the following in the master control module and in each control cycle "T_{control}":
∘ generating a synchronization signal (7') and sending the synchronization signal (7') to the N-slave control modules (6^{i,...n}) sequentially;
∘ measuring three-phase currents (lu_M, Iv_M, Iw_M) and a three-phase voltage (Vd_M, Vq_M) at the output of the master power stage (3);
∘ calculating a master voltage-to-motor phasor (V_M, theta_M) from a control angle (theta_control) and the measured three-phase voltage (Vd_M, Vq_M);
∘ calculating a master current-to-motor phasor (Id_M, Iq_M) from the measured three-phase currents (lu_M, Iv_M, Iw_M) and an angle (theta_M) of the master voltage-to-motor phasor (V_M, theta_M);
∘ sending the master voltage-to-motor phasor (V_M), theta_M) and the master current-to-motor phasor (Id_M, Iq_M) over the control line (8) to the slave control modules (6^{i,...n});
and it additionally comprises carrying out the following in the N-slave control modules (6^{i,...n}) and in each control cycle "T_{control}":
∘ measuring three-phase currents (Iu_Ei,...,En; Iv_Ei,...,En; Iw_Ei,...En) at the output of corresponding slave power stages (4^{i,...n});
∘ calculating slave current phasors (Id_Ei,...,En; Iq_Ei,...,En) from the measured three-phase currents (Iu_Ei,...,En; Iv_Ei,...,En; Iw_Ei,...En) and the angle (theta_M ) of the master voltage-to-motor phasor (V_M, theta_M);
∘ calculating respective slave voltage-to-motor phasors (Vu_Ei_M,...,En_M; Vv_Ei,...,En_M; Vw_Ei_M,...,En_M) and respective slave current-to-motor phasors (Iu_Ei_M,...,En_M; Iv_Ei_M,...,En_M; Iw_Ei_M,...,En_M) by means of a closed-loop control, wherein each slave current-to-motor phasor (Iu_Ei_M,...,En_M; Iv_Ei_M,...,En_M; Iw_Ei_M,...,En_M) is calculated as the slave current phasor (Id_Ei,...En; Iq_Ei,...,En) modified with the current-to-motor phasor (Id_M, Iq_M); and each slave voltage-to-motor phasor (Vu_Ei_M,...,En_M; Vv_Ei,...,En_M; Vw_Ei_M,...,En_M) is calculated from the corresponding slave current-to-motor phasor (Id_Ei_M,...,En_M; Iq_Ei_M,..., En_M) and the master voltage-to-motor phasor (V_M, theta_M);
and it additionally comprises carrying out the following in the master control module (5) and in the N-slave control modules (6^{i,...n}), in a control cycle following "T_{control}", controlling the master power stage (3) and the slave power stages (4^{i,...n}) with the master voltage-to-motor phasor (V_M, theta_M) and the slave voltage-to-motor phasors (Vu_Ei_M,...,En_M; Vv_Ei,...,En_M; Vw_Ei_M,...,En_M) calculated for the control cycle "T_{control}", respectively.

5. **THE CONTROL METHOD OF A MULTIPARALLEL VARIABLE FREQUENCY DRIVE** according to claim 4, wherein the method additionally comprises compensating for a lag in the transmission of the synchronization signal by each of the N-slave control modules by advancing the sending of the synchronization signal (7') by a time equivalent to the lag.
